# EUROPEAN PATENT APPLICATION

(11) **EP 4 712 194 A1**
(43) Date of publication of application: **18.03.2026**
(21) Application number: 24856724.0
(22) Date of filing: 12.08.2024
(51) Int. Cl.: H01M 10/0585, H01M 10/04, H01M 10/0562, H01M 10/052, H01M 50/105, H01M 50/183

(54) **METHOD AND APPARATUS FOR MANUFACTURING ALL-SOLID-STATE BATTERY**

(30) Priority: 22.08.2023 KR 20230110051
(71) Applicant: LG Energy Solution, Ltd., Seoul 07335 (KR)
(72) Inventor: CHOI, Seong Won, Daejeon 34122 (KR); KIM, Yeeun, Daejeon 34122 (KR); KIM, Ji Young, Daejeon 34122 (KR); LEE, Daejin, Daejeon 34122 (KR)
(74) Representative: Goddar, Heinz J.
(86) International application number: PCT/KR2024/011958
(87) International publication number: WO 2025/042112

(57) **Abstract**

A manufacturing method and apparatus for an all-solid-state battery are disclosed, which allow for isostatic pressing without causing cell distortion, thereby preventing cracks in the electrode and electrolyte layers. The manufacturing method for the aforementioned all-solid-state battery includes the steps of: (a) arranging a lower jig with an opening formed in its center portion; (b) accommodating the cup part of a pouch cell downward into the opening of the aforementioned lower jig, and placing the sealing part located on the outer periphery of the aforementioned cup part on the upper surface of the aforementioned lower jig, thereby fixing the aforementioned pouch cell; (c) fixing an upper jig with an opening formed in its center portion on top of the aforementioned lower jig so that the openings overlap and the sealing part of the pouch cell is compressed; and (d) isostatically pressing the aforementioned pouch cell while the pouch cell is seated in the upper jig and lower jig.

## Description

### [Technical Field]

The present application claims the benefit of priority from Korean Patent Application No. 10-2023-0110051, filed on August 22, 2023, the disclosure of which is incorporated herein by reference in its entirety.

The present invention relates to a method and apparatus for manufacturing an all-solid-state battery, and more specifically, to a method and apparatus for manufacturing an all-solid-state battery in which isostatic pressing is performed without cell distortion, thereby preventing cracks from occurring in the electrodes and electrolyte layers.

### [Background Art]

With the explosive growth in technology development and demand for mobile devices and automobiles, more research is being done on secondary batteries with high energy density, high discharge voltage, and good output stability. Examples of such secondary batteries include lithium-based secondary batteries such as lithium-sulfur batteries, lithium-ion batteries, and lithium-ion polymer batteries. In addition, the above-mentioned secondary batteries can be categorized into cylindrical, prismatic, pouch-type, etc., according to their shape, and among them, interest and demand for pouch-type battery cells are gradually increasing. Pouch-type battery cells can be stacked with high integration, have a high energy density per weight, and are inexpensive and easy to deform. As a result, pouch-type battery cells can be fabricated into shapes and sizes that can be applied to a variety of mobile devices and automobiles.

This type of pouch-type battery cell generally has a structure where one or more unit cells, each including a positive electrode, a negative electrode, and a separator interposed therebetween, are stacked (i.e., an electrode assembly or stack cell), and the product can be made by either accommodating this electrode assembly in a battery case and then injecting electrolyte, or by providing a solid electrolyte within the electrode assembly from the beginning (i.e., an all-solid-state battery).

Among these, all-solid-state batteries are superior in terms of safety compared to other types of secondary batteries, and are particularly gaining attention in fields such as electric vehicles and mobile devices. Specifically, an all-solid-state battery refers to a battery that replaces the liquid electrolyte used in conventional lithium secondary batteries with a solid one, and as a result, it can greatly improve safety because it does not use flammable solvents, thus preventing ignition or explosion caused by decomposition reactions of conventional electrolytes. Furthermore, all-solid-state batteries have the advantage of being able to dramatically improve energy density relative to the mass and volume of the battery because they can use Li metal or Li alloys as the negative electrode material.

Meanwhile, the solid electrolytes of all-solid-state batteries can be broadly classified into organic (polymer-based) solid electrolytes and inorganic (mineral-based) solid electrolytes, and among these, inorganic solid electrolytes can be further divided into sulfide-based and oxide-based types. Currently, the solid electrolyte that has undergone the most technological development is the sulfide-based solid electrolyte, which has been developed to the point where its ionic conductivity approaches that of organic liquid electrolytes. Thus, sulfide-based solid electrolytes not only possess high ionic conductivity among solid electrolytes, ranging from 10⁻³ S/cm to 10⁻² S/cm (High Ionic conductivity), but they also exhibit excellent thermal stability (thermal stability), and have the additional advantage of being ductile, allowing for good contact at interfaces, which is beneficial for improving resistance (interfacial compatibility).

These sulfide-based all-solid-state batteries are typically manufactured using a warm isostatic pressing (WIP) process (i.e., the electrodes are wrapped in a pouch, sealed, and pressed) to ensure that the electrode-solid electrolyte interface is bonded. If the interface between the electrode-solid electrolyte is not well bonded and, thus the interface between electrode-solid electrolyte interface is not well formed, it is difficult for lithium (Li) ions to move, and the battery cannot be operated.

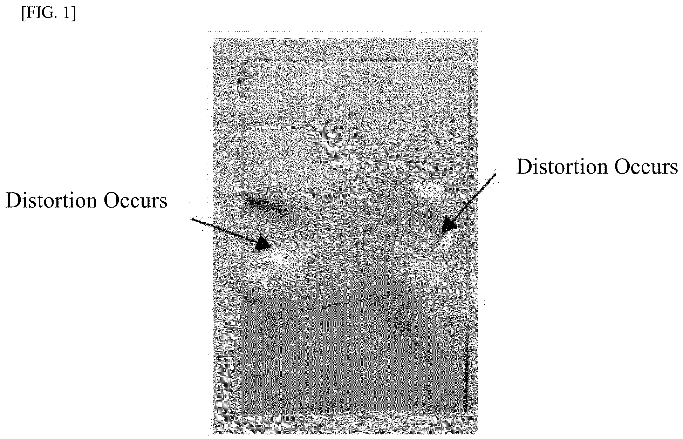

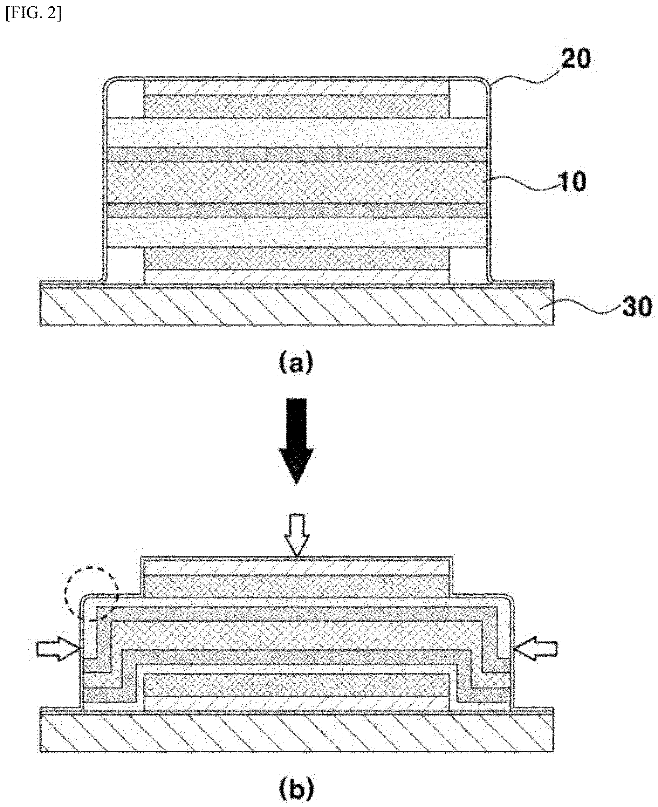

FIG. 1 is an image showing the distortion that occurs when a pouch cell is pressed using conventional methods. However, as shown in FIG. 1, there is a problem that distortion of the pouch cell occurs during the isostatic pressing process, and thus, cracks occur in the electrode. FIG. 2 is a schematic diagram illustrating the pressing of a pouch cell using a conventional method. To prevent the aforementioned problem, as shown in FIG. 2, the electrode assembly 10 is wrapped in a pouch 20 and sealed, then the pouch cell is fixed to a plate 30 located on the bottom surface (FIG. 2a), after which the isostatic pressing process is carried out (FIG. 2b) (The arrows in FIG. 2b indicate the application of pressure). However, in this case, the isostatic pressing process cannot be performed normally because one side of the pouch cell (electrode) in contact with the plate is blocked by the plate, and in the case of a pouch cell with a bi-cell shape, the electrode as well as the electrolyte layer may be cracked due to deformation of the pouch (cracks occur in the area circled by the dotted line in FIG. 2b). Therefore, it is necessary to seek a new method of manufacturing all-solid-state batteries that can isostatically press pouch cells without causing the above problems.

### [Detailed Description of Invention]

### [Technical Problems]

Accordingly, an objective of the present invention is to provide a method and apparatus for manufacturing an all-solid-state battery in which cracks do not occur in electrodes and electrolyte layers because cell distortion does not occur when the isostatic pressing is performed.

### [Technical Solutions]

To achieve the aforementioned objectives, the present invention provides a method for manufacturing an all-solid-state battery, comprising: (a) arranging a lower jig having an opening formed at a center portion thereof; (b) accommodating a cup portion of a pouch cell downwardly into the opening of the lower jig, and securing the pouch cell by hooking a sealing part located on an outer periphery of the cup portion onto an upper surface of the lower jig; (c) securing an upper jig having an opening formed at a center portion thereof to an upper surface of the lower jig such that the openings overlap and the sealing part of the pouch cell is compressed; and (d) isostatically pressing the pouch cell while being secured in the upper jig and the lower jig.

Furthermore, the present invention provides an apparatus for manufacturing an all-solid-state battery, comprising: a lower jig including an opening in the center portion for accommodating a cup portion of a pouch cell and an upper surface for supporting a sealing part of the pouch cell; and an upper jig, arranged above the lower jig, including an opening that overlaps an opening in the lower jig and a lower surface for pressing the sealing part of the pouch cell.

### [Advantageous Effects]

A method and apparatus for manufacturing an all-solid-state battery according to the present invention has the advantage of no distortion occurring in the cell while isostatically pressing the pouch cell, thereby preventing cracking of the electrode and electrolyte layers comprising the pouch cell.

### [Brief Description of the Drawings]

FIG. 1 is an image showing the distortion that occurs when a pouch cell is pressed using conventional methods.
FIGS. 2a-b are schematic diagrams of pressing a pouch cell using a conventional method.
FIG. 3 is a schematic diagram showing the pouch cells being prepared using a jig prior to isostatic pressing in accordance with an example of the present invention.
FIG. 4 is a schematic diagram illustrating a stacked structure of an electrode assembly located inside an isostatically be pressed pouch cell in accordance with an example of the present invention.
FIGS. 5a-b are schematic diagrams illustrating a pouch cell that is isostatically be pressed in accordance with an example of the present invention.
FIGS. 6a-b are exterior images of an isostatically pressed pouch cell in accordance with an example of the present invention.

### [Examples]

Hereinafter, the present invention will be described in detail with reference to the accompanying drawings.

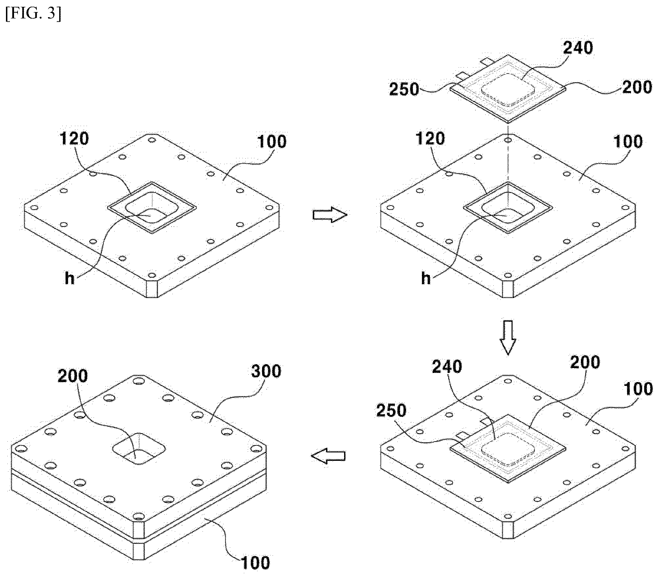

FIG. 3 is a schematic diagram of a pouch cell prepared using a jig prior to isostatic pressing in accordance with an example of the present invention. Referring to FIG. 3, the method for manufacturing an all-solid-state battery according to the present invention includes the steps of: (a) arranging a lower jig with an opening formed in its center portion, (b) accommodating a cup part of a (non-isostatically pressed) pouch cell downwardly into the opening of the lower jig, and fixing the pouch cell by placing the sealing part located on an outer periphery of the cup part (or located at the outermost edge based on the horizontal direction of the pouch cell) on an upper surface of the lower jig, (c) fixing an upper jig with an opening formed in its center portion to the top of the lower jig so that the openings overlap and the sealing part of the pouch cell is compressed, and (d) isostatically pressing the pouch cell while the pouch cell is seated on the upper jig and lower jig.

In order to manufacture an all-solid-state battery according to the present invention, a lower jig 100 having an opening h formed in a center portion as shown in FIG. 3 is needed to be arranged at first. (step a). At this time, the opening h of the lower jig 100 is preferably positioned so that the pouch cell cup portion, which will be described later, is inserted into the opening h of the lower jig 100 in a downward direction, and the opening h of the lower jig 100 is arranged facing toward the upper part of the ground plane.

Meanwhile, in FIG. 3, the lower jig 100 is illustrated as having the shape of a hexahedron. However, this is for convenience of illustration only, and there is no particular limitation on the shape of the lower jig 100 as long as the lower jig 100 is formed with an opening for accommodating the pouch cell cup portion. Furthermore, there is no particular limitation on the width or height of the lower jig 100 or the opening h, which may be variable depending on the dimensions of the pouch cell or the cup portion of the pouch cell.

As described above, after placing the lower jig 100 with an opening h formed in its center portion, the cup part 240 of the pouch cell 200 to be isostatic pressed is accommodated downward into the opening h of the aforementioned lower jig 100, and the sealing part 250 located on the outer periphery of the aforementioned cup part 240 is hung on the upper surface of the aforementioned lower jig, thereby performing the step of securing the aforementioned pouch cell 200 (step b).

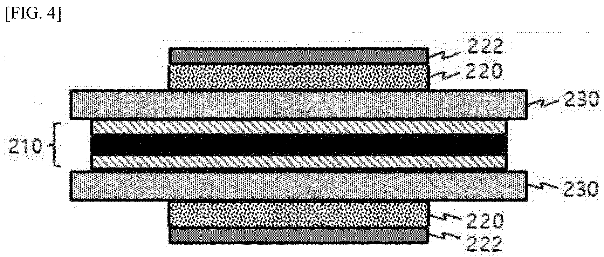

FIG. 4 is a schematic diagram illustrating a stacked structure of an electrode assembly located inside an isostatically be pressed pouch cell in accordance with an example of the present invention. The pouch cell 200 may be a mono-cell with a conventional pouch covering, where a solid electrolyte 230 and a positive electrode 220 (or a positive electrode not including a collector 222, or a free-standing positive electrode) are sequentially stacked on one side of a negative electrode 210. Additionally, as shown in FIG. 4, the pouch cell 200 may be a bi-cell with a conventional pouch covering, where a solid electrolyte 230 and a positive electrode 220 (or a positive electrode not including a collector 222, or a free-standing positive electrode) are sequentially stacked on both sides of a negative electrode 210. Additionally, the pouch cell 200 may include a structure of more than a bi-cell, or it may include cells with a different stacking structure of electrodes and electrolytes than the one described above.

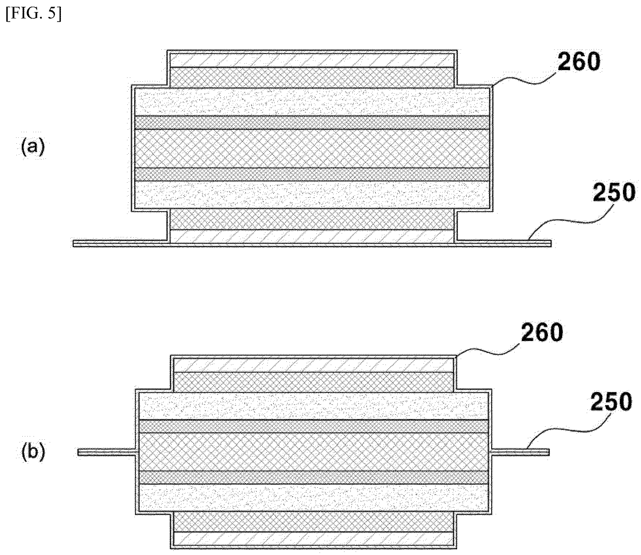

As described above, an electrode assembly such as a mono-cell or a bi-cell is accommodated in the pouch cell 200, and at this time, the border part formed by sealing the pouch over the electrode assembly is called a 'sealing part'. Also, the remaining part other than the sealing part, i.e., the part protruding from the sealing part, is referred to as the 'cup part'. FIG. 5 is a schematic diagram illustrating a pouch cell that is isostatically be pressed according to an example of the present invention. Meanwhile, regarding the pouch cell 200 of the present invention, the sealing part 250 of the pouch 260 may be located at the outermost side based on the stacking direction of the cell (FIG. 5a), or may be located in the center portion (FIG. 5b), or may be located between these positions, without any particular restriction.

Referring to this, to explain step (b) more specifically, after arranging the lower jig 100, the cup part 240 of the non-isostatically pressed pouch cell 200 should be accommodated downwardly into the opening h of the lower jig 100. In this case, only the cup portion 240 of the aforementioned pouch cell 200 should be accommodated in the opening h of the lower jig 100. Accordingly, the size of the opening h of the lower jig 100 can be varied depending on the size of the cup portion of the pouch cell 200 to be isostatically pressed.

Furthermore, the height of the opening h of the lower jig 100 may be equal to or higher than the height of the cup portion 240 of the pouch cell 200. For example, the height of the opening h of the lower jig 100 may be the 'surface height of the cup portion 240' of the pouch cell 200 minus the 'surface height of the sealing part 250 in the unbent state'. However, if the opening h of the lower jig 100 is higher than the height of the cup part 240 of the pouch cell 200, during compression, the cup part 240 of the pouch cell 200 may be pushed into the empty space of the opening h, making normal compression impossible. Additionally, the sealing part 250 connected to the cup part 240 may also be rolled into the opening h of the lower jig 100 together. Therefore, it may be preferred that the height of the opening h of the lower jig 100 is preferably the same as the height of the cup portion 240 of the pouch cell 200.

Therefore, when the cup part 240 of the pouch cell 200 is properly accommodated in the opening h of the lower jig 100, the sealing part 250 located at the outermost edge based on the horizontal direction of the pouch cell 200 must necessarily rest on the upper surface of the lower jig 100 (more specifically, on the peripheral area of the opening h on the upper surface of the lower jig 100). And accordingly, it is possible to fix the cup part 240 of the pouch cell 200 in a state where it is accommodated in the opening h of the lower jig 100.

Meanwhile, on the upper surface of the lower jig 100, a groove 120 may be further formed along the periphery of the opening h, as shown in FIG. 3. This is a means to more stably fix the sealing part 250 of the pouch cell 200. After positioning the sealing part 250 of the pouch cell 200 along the groove 120, an elastic ring can be inserted into the position corresponding to the groove 120, thereby completely fixing the sealing part 250. In other words, after the sealing part 250 of the pouch cell 200 rests on the upper surface of the lower jig 100 and covers the groove 120, the sealing part 250 can be fixed by inserting an elastic ring into the groove 120 in a way that interposes the sealing part 250 of the pouch cell 200.

Next, after accommodating the cup part 240 of the non-isostatically pressed pouch cell 200 in the opening h of the lower jig 100 as described above, a step of fixing an upper jig 300 with an opening formed in its center portion to the top of the lower jig 100 is performed so that the openings overlap and the sealing part 250 of the pouch cell 200 is compressed (step c). For example, an upper jig 300 having the same shape as the lower jig 100 and is stacked on top of the lower jig 100 in the same position on the upper side of the lower jig 100 to press and secure the sealing part 250 of the pouch cell 200.

This is to ensure that the sealing part 250 of the pouch cell 200 is pressed and secured, and to enable the cup portion 240 of the pouch cell 200 to be pressed more smoothly. At this point, it is necessary to fix the upper jig 300 and the lower jig 100 so that the upper jig 300 and the lower jig 100 are not out of alignment with each other. For this purpose, adhesive means or fastening means may be utilized. However, considering the convenience of repeated operations, it may be preferable to form a threaded groove in each of the upper jig 300 and the lower jig 100, as shown in FIG. 3, so that they can be screwed together (i.e., fastened with a screw-bolt).

Meanwhile, it is preferrable that each of the upper jig 300 and the lower jig 100 mentioned above is made of a material that has no or very little porosity, respectively. In particular, the presence of voids (pores) in the upper jigs 100 and lower jigs 300 during the isostatic pressing process may cause cracking. Therefore, the upper jig 300 and the lower jig 100 may have a porosity of less than 1%, preferably less than 0.5%, and even more preferably less than 0.1%. Additionally, for example, the upper jig 300 and the lower jig 100 may each be made of a material selected from, but not limited to, steel and ceramic, respectively. Additionally, the upper jig 300 and the lower jig 100 may be made of the same material or different materials, without limitation.

Finally, after overlapping the upper jig 300 on top of the lower jig 100 to compress and fix the sealing part 250 of the pouch cell 200, a step of isostatically pressing the pouch cell 200 while the pouch cell 200 is seated on the upper jig 300 and lower jig 100 is performed (step d). In addition, the pouch cell (or all-solid-state battery) which is isostatically pressed by the above process, may be stored or used in a separate accommodation case or the like.

The isostatic pressing may be any one of the methods selected from a group consisting of: Warm Isostatic Pressing (WIP), Hot Isostatic Pressing (HIP), and Cold Isostatic Pressing (CIP). The isostatic pressing may preferably be performed at a temperature within a suitable range where the electrode components are thermally stable, while maintaining good interfacial contact between the electrodes due to the molding of the solid electrolyte. For example, the warm isostatic pressure (WIP) may be performed at 45 to 100 °C.

Next, with reference to FIG. 3, an apparatus for manufacturing an all-solid-state battery according to the present invention will be described. The manufacturing apparatus for the aforementioned all-solid-state battery comprises: a lower jig 100 including an opening h in its center portion for accommodating the cup part 240 of the pouch cell 200, and an upper surface for supporting the sealing part 250 of the pouch cell 200; and an upper jig 300 arranged above the aforementioned lower jig 100, including an opening that overlaps with the opening h of the aforementioned lower jig 100, and a lower surface for pressing the sealing part 250 of the pouch cell 200.

Furthermore, on the upper surface of the lower jig 100, a groove 120 may be further formed along the periphery of the opening h, as shown in FIG. 3. Furthermore, an elastic ring may be inserted into the groove 120 in such a way as to be interposed between the sealing portion 250 of the pouch cell 200. A detailed description thereof and the rest of the configuration will be omitted, as it is identical to that described in the method of manufacture of an all-solid-state battery.

Meanwhile, in an all-solid-state battery manufactured according to the method for manufacturing an all-solid-state battery according to the present invention, the positive electrode may include a positive-electrode active material, a conductive material, and a binder in the form of granules. Of these, any positive-electrode active material that can be used as a positive-electrode active material in all-solid-state batteries can be used without limitation. The positive-electrode active material may be a lithium transition metal oxide that contains one or more transition metals. For example, the positive-electrode active material may be selected from the group consisting of: LiCoO₂, LiNiO₂, LiMnO₂, Li₂MnO₃, LiMn₂O₄, Li(NiₐCo_{b}Mn_{c})O₂(0<a<1, 0<b<1, 0<c<1, a+b+c=1), LiNi_{1-y}Co_{y}O₂(O<y<1), LiCo_{1-y}Mn_{y}O₂, LiNi_{1-y}Mn_{y}O₂(O<y<1), Li(NiₐCo_{b}Mn_{c})O₄(0<a<2, 0<b<2, 0<c<2, a+b+c=2), LiMn_{2-z}Ni_{z}O₄ (0<z<2), LiMn_{2-z}Co_{z}O₄ (0<z<2), and combinations thereof.

Moreover, the aforementioned binder is mixed with powdery fine particles of positive-electrode active material and conductive material, binding each component together and helping the growth of particles. For example, sulfide-based solid electrolytes have characteristics that are sensitive to moisture, such as generating H₂S gas upon contact with moisture, so that it is desirable to exclude as much moisture as possible from the formation of the granules. The binder may be an organic binder, wherein an organic binder means a binder that is soluble or dispersible in an organic solvent, in particular N-methylpyrrolidone (NMP), as distinguished from an aqueous binder, wherein water is the solvent or dispersant. For example, the aforementioned binder may be selected from a group consisting of: polyvinylidene fluoride (PVDF), vinylidene fluoridehexafluoropropylene copolymer (PVDF-co-HFP), polyvinyl alcohol, starch, hydroxypropyl cellulose, regenerated cellulose, polyvinylpyrrolidone, polyimide, polyamide-imide, polyethylene, polypropylene, ethylene-propylene-diene monomer (EPDM), sulfonated EPDM, styrene butadiene rubber, and fluorine rubber, but is not limited thereto.

In the aforementioned all-solid-state battery, the solid electrolyte may include one or more selected from sulfide-based solid electrolyte, polymer-based solid electrolyte, and oxide-based solid electrolyte, and it may be preferable to include only the sulfide-based solid electrolyte. The aforementioned sulfide-based solid electrolyte may include lithium salt, and the lithium salt can be expressed as Li⁺X⁻ as an ionizable lithium salt. The anions of such lithium salts are not particularly limited, but may such as F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ can be exemplified.

In addition, the sulfide-based solid electrolyte may contain a Li-P-S based glass or a LiP-S based glass-ceramic, which contains sulfur (S) and has an ionic conductivity of a metal belonging to the first or second group of the periodic table. Non-limiting examples of such sulfide-based solid electrolytes include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₃-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, among others, and the aforementioned sulfide-based solid electrolyte may include one or more of these.

Such solid electrolyte can simultaneously perform the role similar to that of a separator in a typical lithium secondary battery (i.e., the role of electrically insulating the negative electrode and the positive electrode while allowing lithium ions to pass through). Meanwhile, the aforementioned all-solid-state battery can be utilized as a semi-solid battery by including a liquid electrolyte as needed, in which case a separate polymer separator may be additionally required.

In the aforementioned all-solid-state battery, the negative electrode may include negative-electrode active materials that can be used in conventional all-solid-state batteries. For example, the negative-electrode active material may include one or more selected from: carbon such as nongraphitizable carbon and graphitic carbon; metal complex oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, elements from groups 1, 2, 3 of the periodic table, halogens; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxide; and lithium titanium oxide.

Additionally, the present invention also provides a battery module comprising the all-solid-state battery as a unit cell, a battery pack comprising the battery module, and a device comprising the battery pack as a power source. Specific examples of the aforementioned device include, but are not limited to: power tools that are powered by electric motors; electric vehicles including Electric Vehicles (EV), Hybrid Electric Vehicles (HEV), Plug-in Hybrid Electric Vehicles (PHEV); electric two-wheelers including electric bicycles (E-bikes) and electric scooters (E-scooters); electric golf carts; and power storage systems.

### [Best Mode for practicing the invention]

The following preferred examples are presented to aid in understanding the present invention; however, these are merely illustrative of the present invention, and it is clear to those skilled in the art that various changes and modifications are possible within the scope and technical spirit of the present invention, and it is also natural that such changes and modifications belong to the appended Claims.

### [Example 1] Manufacture of All-solid-state batteries

First, after placing a steel lower jig with an opening formed in its center portion, a pouch cell cup part of the form shown in Fig. 5a was accommodated downward into the opening of the aforementioned lower jig, and the sealing part located on the outer periphery of the aforementioned cup part was hung on the upper surface of the aforementioned lower jig, thereby fixing the cup part of the aforementioned pouch cell in a state where it was accommodated in the opening of the aforementioned lower jig. Then, an upper jig of the same shape and material as the aforementioned lower jig was stacked on top of the aforementioned lower jig in the same position, compressing and fixing the sealing part of the aforementioned pouch cell, and finally, the aforementioned pouch cell was subjected to warm isostatic pressing (WIP) while the pouch cell is seated in the upper jig and lower jig.

### [Example 2] Manufacture of All-solid-state batteries

A groove was further formed along the periphery of the opening of the lower jig, and an elastic ring was inserted into the groove in a manner that interposed the sealing part of the pouch cell; except for this, the process was performed identically to the aforementioned Example 1.

### [Comparative Example 1] Manufacture of All-solid-state batteries

Instead of using a jig, a plate was arranged on the bottom surface as shown in FIG. 2 and a pouch cell (the same as used in Example 1) was secured to the top of the plate and subjected to warm isostatic pressing (isostatic pressure under the same conditions as in Example 1).

### [Experimental Example 1] Appearance Evaluation of Isostatically Pressed Pouch Cells

The appearance of the isostatically pressed pouch cell in Examples 1 and 2 and Comparative Example 1 was observed, and it was also checked whether cracking occurred in the electrode and electrolyte layers.

As a result of observing the appearance of the pouch cells isostatically pressed in Examples 1, 2 and Comparative Example 1 as described above, in the case of Comparative Example 1 where the pouch cell was isostatically pressed using plates, distortion of the pouch cell occurred as shown in Fig. 1, and upon examining the interior, cracks were found in the electrode and electrolyte layer.

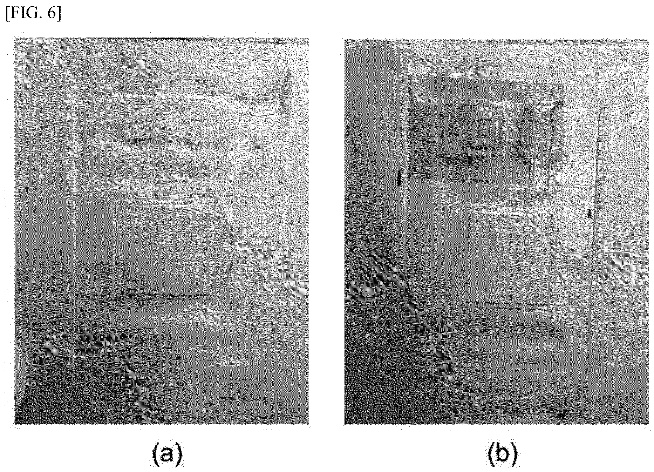

FIG. 6 is an appearance image of a pouch cell that has been isostatically pressed in accordance with an example of the present invention. In contrast, for Examples 1 and 2, where the pouch cell was isostatically pressed using a pair of jigs with openings, both the front (a in FIG. 6) and back (b in FIG. 6) of the pouch cell were fabricated as intended without distortion, and the electrode and electrolyte layers inside were completely free of cracks, as shown in FIG. 6.

### [Explanation of the Reference Numerals]

100: Lower Jig (h: Opening, 120: Groove)
200: Pouch cell (210: negative electrode, 220: positive electrode, 230: electrolyte, 240: cup part, 250: sealing part, 260: pouch)
300: Upper Jig

## Claims

1. A method of manufacturing an all-solid-state battery, comprising:
(a) arranging a lower jig having an opening formed at a center portion thereof;
(b) accommodating a cup portion of a pouch cell downwardly into the opening of the lower jig, and securing the pouch cell by placing a sealing part located on an outer periphery of the cup portion onto an upper surface of the lower jig;
(c) securing an upper jig having an opening formed at a center portion thereof to the upper surface of the lower jig such that the openings overlap, and the sealing part of the pouch cell is compressed; and
(d) isostatically pressing the pouch cell while being secured in the upper jig and the lower jig.

2. The method of manufacturing an all-solid-state battery of claim 1, wherein a height of the opening of the lower jig is equal to or greater than a height of the cup portion of the pouch cell.

3. The method of manufacturing an all-solid-state battery of claim 1, wherein the upper surface of the lower jig further has a groove formed along a periphery of the opening.

4. The method of manufacturing an all-solid-state battery of claim 3, comprising: positioning the sealing part of the pouch cell along the groove and securing the sealing part by inserting an elastic ring in a corresponding position in the groove.

5. The method of manufacturing an all-solid-state battery of claim 1, wherein the upper jig and the lower jig are fastened with screws.

6. The method of manufacturing an all-solid-state battery of claim 1, wherein the upper jig and the lower jig have a porosity of less than 1%.

7. The method of manufacturing an all-solid-state battery of claim 6, wherein the upper jig and the lower jig are each made of one of steel and ceramic.

8. The method of manufacturing an all-solid-state battery of claim 1, wherein the pouch cell comprises a mono-cell or bi-cell structure, or more.

9. The method of manufacturing an all-solid-state battery of claim 1, wherein the isostatic pressing is one selected from the group consisting of: a warm isostatic pressing, hot isostatic pressing, and cold isostatic pressing.

10. The method of manufacturing an all-solid-state battery of claim 1, wherein the all-solid-state battery is a sulfide-based all-solid-state battery.

11. An apparatus for manufacturing an all-solid-state battery, comprising:
a lower jig including an opening in the center portion for accommodating a cup portion of a pouch cell and an upper surface for supporting a sealing part of the pouch cell; and
an upper jig, arranged above the lower jig, including an opening that overlaps an opening in the lower jig and a lower surface for pressing the sealing part of the pouch cell.

12. The apparatus for manufacturing an all-solid-state battery of claim 11, wherein a groove is further formed on the upper surface of the lower jig along a periphery of the opening.

13. The apparatus for manufacturing an all-solid-state battery of claim 12, wherein an elastic ring is inserted into the groove, and the sealing part of the pouch cell is interposed and fixed between the groove and the elastic ring.
